# EUROPEAN PATENT APPLICATION

(11) **EP 3 379 098 A1**
(43) Date of publication of application: **26.09.2018**
(21) Application number: 16866346.6
(22) Date of filing: 16.11.2016
(51) Int. Cl.: F16D 1/02, F04D 29/044, F04D 29/60

(54) **SHAFT COUPLING AND PUMP DEVICE**

(30) Priority: 19.11.2015 JP 2015227072
(71) Applicant: Ebara Corporation, Ohta-ku, Tokyo 144-8510 (JP)
(72) Inventor: KUROIWA, So, Tokyo 144-8510 (JP); SAKIHAMA, Dai, Tokyo 144-8510 (JP); GROPPO, Renato, 38023 Cles (Trento) (IT); GROPPO, Marco, 38023 Cles (Trento) (IT); MAULE, Mauro, 38023 Cles (Trento) (IT); RIGON, Nicola, 38023 Cles (Trento) (IT)
(74) Representative: Wagner & Geyer
(86) International application number: PCT/JP2016/083964
(87) International publication number: WO 2017/086345

(57) **Abstract**

The present invention relates to a shaft coupling (also referred to as a spacer coupling) that couples a motor shaft and a pump shaft while both shafts are spaced from each other. The present invention is further relates to a pump apparatus having such a shaft coupling. The shaft coupling (10) includes: a first inner circumferential surface (23) capable of contacting an outer circumferential surface of a motor shaft (6); a second inner circumferential surface (24) capable of contacting an outer circumferential surface of a pump shaft (1); a step portion (26) protruding radially inwardly from the first inner circumferential surface (23) and capable of contacting an end portion of the motor shaft (6); and a spacer portion (28) located between the step portion (26) and the second inner circumferential surface (24).

## Description

### Technical field

The present invention relates to a shaft coupling (also referred to as a spacer coupling) that couples a motor shaft and a pump shaft while both shafts are spaced from each other. The present invention also relates to a pump apparatus having such a shaft coupling.

### Background Art

A pump apparatus for pumping a liquid is provided with a shaft-sealing device for preventing leakage of a high-pressure liquid. A mechanical seal is a typical example of such a shaft-sealing device. The mechanical seal has a rotary-side seal ring and a stationary-side sealing ring which are in sliding contact with each other, and therefore regular replacement of the mechanical seal is required. In a conventional pump apparatus, in order to remove the mechanical seal, it is necessary to firstly remove a shaft coupling that couples a motor and a pump, and then to remove the motor.

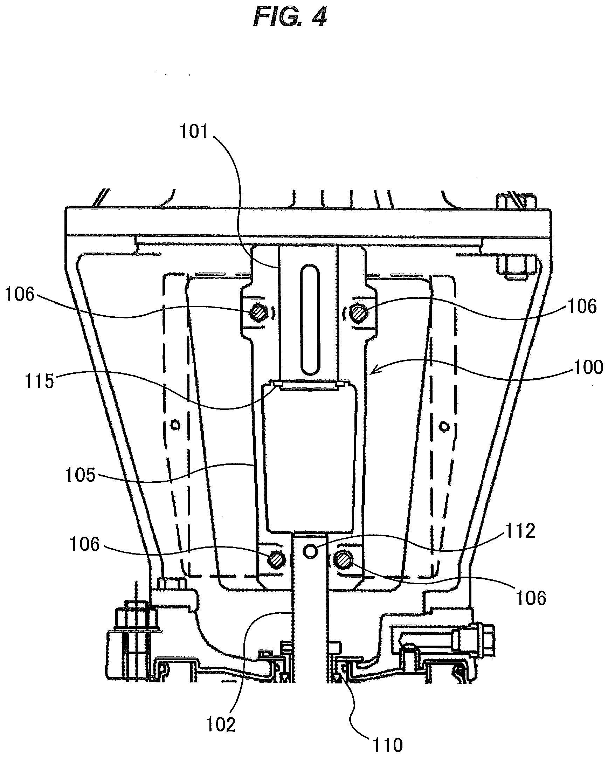

However, since the motor is a heavy structure, there may be a case where a heavy machine, such as a crane, is necessary for removing the motor. Therefore, there is a shaft coupling called a spacer coupling which makes it possible to replace the mechanical seal without removing the motor. As shown in FIG. 4, a shaft coupling 100 of this type is configured to couple a motor shaft 101 to a pump shaft 102 in a state in which the end portion of the motor shaft 101 and the end portion of the pump shaft 102 are spaced from each other. The shaft coupling 100 shown in FIG. 4 has two members 105 which are divided along an axial direction, and a plurality of screws 106 that fix these members 105 to each other. In FIG. 4, only one of the two members 105 is depicted.

The replacement of the mechanical seal 110 is performed as follows. First, the screws 106 are removed so that the shaft coupling 100 is removed from the motor shaft 101 and the pump shaft 102. Next, the mechanical seal 110 is raised along the pump shaft 102, until the mechanical seal 110 is removed from a gap between the end portion of the motor shaft 101 and the end portion of the pump shaft 102. Then, a new mechanical seal is moved downward along the pump shaft 102 from the gap to a predetermined position. The screws 106 are then tightened to secure the shaft coupling 100 to the motor shaft 101 and the pump shaft 102.

### Citation List

### Patent Literature

Patent document 1: Japanese laid-open patent publication No. 4-91391

### Summary of Invention

### Technical Problem

The axial position of the pump shaft 102 needs to be such that an impeller, which is secured to the pump shaft 102, does not contact other members such as a casing. Therefore, positioning of the pump shaft 102 is important. The patent document 1 discloses a distance restriction screw for positioning a pump shaft. This distance restriction screw is sandwiched between an end portion of the pump shaft and an end portion of a motor shaft. The positioning of the pump shaft is achieved by the adjustment of the axial length of the distance restriction screw. However, in the configuration of the patent document 1, the distance restriction screw exists between the end portion of the pump shaft and the end portion of the motor shaft. As a result, it is impossible to remove a mechanical seal without removing the motor.

Thus, in the example shown in FIG. 4, the positioning of the shaft coupling 100 with respect to the pump shaft 102 is achieved by the positioning pin 112 secured to the pump shaft 102, and the positioning of the shaft coupling 100 with respect to the motor shaft 101 is achieved by a snap ring 115 attached to a lower end of the motor shaft 101. The relative position of the pump shaft 102 with respect to the motor shaft 101 is fixed by the positioning pin 112 and the snap ring 115. As a result, the positioning of the pump shaft 102 is achieved.

However, in order to mount the snap ring 115 on the motor shaft 101, the motor shaft 101 must have an annular groove into which the snap ring 115 is fitted. Since the motor having such an annular groove is a motor having a special shape, the cost of the motor increases. Moreover, it is impossible to attach the shaft coupling 100, shown in FIG. 4, to a general-purpose motor having no annular groove.

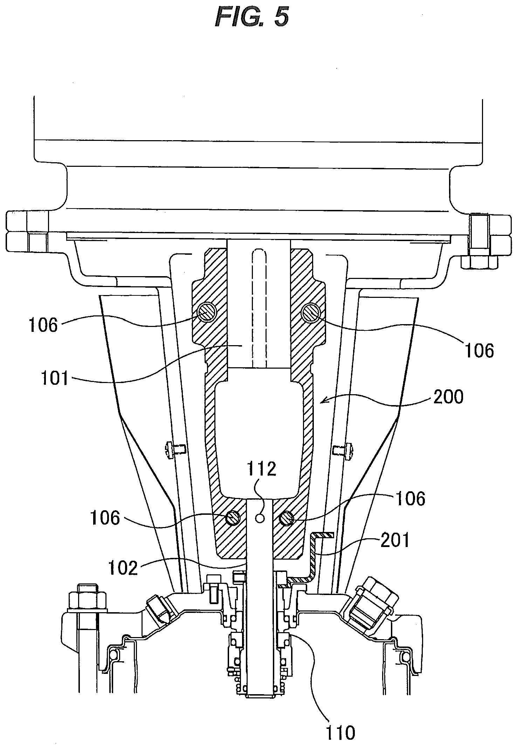

FIG. 5 is a view showing another example of a conventional shaft coupling. In FIG. 5, the same reference numerals are given to the same structural elements as those shown in FIG. 4. A shaft coupling 200 shown in FIG. 5 does not have the snap ring described above. Therefore, it is possible to construct a pump apparatus using a general-purpose motor which does not have the above-mentioned annular groove.

However, as shown in FIG. 5, when assembling the shaft coupling 200, it is necessary to use a dedicated positioning jig (e.g., a shim) 201 so as to fix the position of the pump shaft 102. For this reason, it is necessary to prepare the dedicated positioning jig 201 every time. Moreover, if the jig 201 is lost, it is impossible to assemble the shaft coupling 200.

The present invention has been made in view of the above circumstances. It is therefore an object of the present invention to provide a shaft coupling which can be applied to a general-purpose motor and does not require a special positioning jig. It is another object of the present invention to provide a pump apparatus having such a shaft coupling.

### Solution to Problem

In order to achieve the above object, according to one aspect of the present invention, there is provided a shaft coupling comprising: a first inner circumferential surface capable of contacting an outer circumferential surface of a motor shaft; a second inner circumferential surface capable of contacting an outer circumferential surface of a pump shaft; a step portion protruding radially inwardly from the first inner circumferential surface and capable of contacting an end portion of the motor shaft; and a spacer portion located between the step portion and the second inner circumferential surface.

In a preferred aspect of the present invention, the shaft coupling further includes: a first member and a second member which are divided along an axial direction of the shaft coupling, the first member and the second member including the first inner circumferential surface, the second inner circumferential surface, the step portion, and the spacer portion; and a fastening device that fastens the first member and the second member to each other.

According to one aspect of the present invention, there is provided a pump apparatus comprising: an impeller; a pump shaft to which the impeller is secured; a pump casing in which the impeller is housed; a shaft-sealing device that seals a gap between the pump casing and the pump shaft; a motor having a motor shaft; and a shaft coupling that couples the motor shaft and the pump shaft to each other, the shaft coupling including a first inner circumferential surface contacting an outer circumferential surface of the motor shaft, a second inner circumferential surface contacting an outer circumferential surface of the pump shaft, a step portion protruding radially inwardly from the first inner circumferential surface, the step portion being in contact with an end portion of the motor shaft, and a spacer portion located between the step portion and the second inner circumferential surface.

According to a preferred aspect of the present invention, a distance between the end portion of the motor shaft and the end portion of the pump shaft is larger than an axial length of the shaft-sealing device.

According to a preferred aspect of the present invention, the shaft coupling further includes a first member and a second member which are divided along an axial direction of the shaft coupling, and a fastening device that fastens the first member and the second member to each other; and the first member and the second member include the first inner circumferential surface, the second inner circumferential surface, the step portion, and the spacer portion.

According to a preferred aspect of the present invention, the pump apparatus further comprises a positioning element configured to fix a relative position of the second inner circumferential surface and the pump shaft.

### Advantages of the Invention

The positioning of the shaft coupling with respect to the motor shaft is achieved by bringing the end portion of the motor shaft into contact with the step portion of the shaft coupling. As a result, the axial positioning of the pump shaft connected to the shaft coupling is achieved. According to the present invention, there is no need to perform special machining on the motor shaft. Therefore, it is possible to use a general-purpose motor to construct the pump apparatus. Consequently, the manufacturing cost of the pump apparatus can be reduced. Further, according to the present invention, the positioning of the shaft coupling with respect to the motor shaft can be achieved by simply bringing the end portion of the motor shaft into contact with the step portion. Therefore, it is not necessary to prepare a special positioning jig.

### Brief Description of Drawings

FIG. 1 is a cross-sectional view showing a pump apparatus according to an embodiment of the present invention;
FIG. 2 is an enlarged cross-sectional view showing the shaft coupling shown in FIG. 1;
FIG. 3 is a view seen from a direction indicated by arrow A in FIG. 2;
FIG. 4 is a cross-sectional view showing an example of a conventional shaft coupling; and
FIG. 5 is a cross-sectional view showing another example of a conventional shaft coupling.

### Description of Embodiments

Embodiments of the present invention will now be described with reference to the drawings.

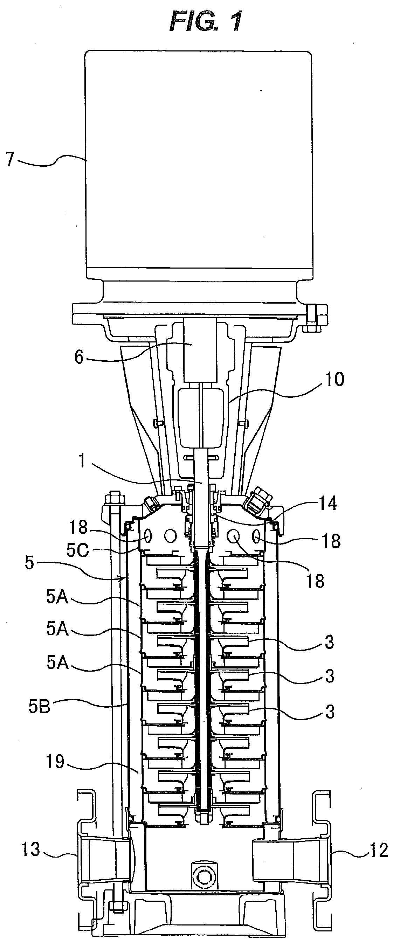

FIG. 1 is a cross-sectional view showing a pump apparatus according to an embodiment of the present invention. As shown in FIG. 1, the pump apparatus includes a pump shaft 1, a plurality of impellers 3 secured to the pump shaft 1, a pump casing 5 in which the impellers 3 are housed, a motor 7 having a motor shaft 6, and a shaft coupling 10 that couples the motor shaft 6 and the pump shaft 1 to each other.

In this embodiment, the pump shaft 1 and the motor shaft 6 are arranged in a vertical position. The plurality of impellers 3 are arranged so as to face in the same direction. The pump casing 5 has a plurality of inner casings 5A in which the plurality of impellers 3 are housed, respectively, an outer casing 5B in which the inner casings 5A are housed, and a connection casing 5C that connects the inner casing 5A and the outer casing 5B. Further, the pump casing 5 has a suction port 12 and a discharge port 13.

When the motor 7 is set in motion, the rotation of the motor 7 is transmitted from the motor shaft 6 to the pump shaft 1 via the shaft coupling 10, so that the pump shaft 1 and the impellers 3 rotate. When the impellers 3 rotate, a liquid flows into the pump casing 5 through the suction port 12, and is pressurized by the rotation of each stage of the impellers 3. The pressurized liquid flows out from the inner casings 5A through a plurality of through-holes 18 formed in the connection casing 5C. The liquid further flows through a flow path 19 which is formed between the inner casings 5A and the outer casing 5B, and is then discharged through the discharge port 13.

The pump apparatus includes a mechanical seal 14 which is a shaft-sealing device that seals a gap between the pump casing 5 and the pump shaft 1. This mechanical seal 14 is disposed in the connection casing 5C of the pump casing 5. The mechanical seal 14 is configured to prevent the leakage of the pressurized liquid from the pump casing 5.

The above-described pump apparatus is a multistage pump apparatus having the plurality of impellers 3, while the present invention can also be applied to a single-stage pump apparatus having only one impeller.

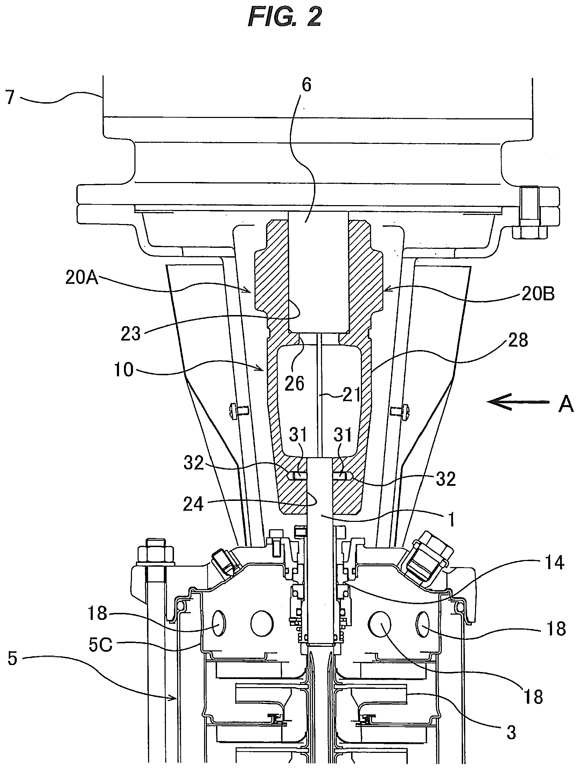

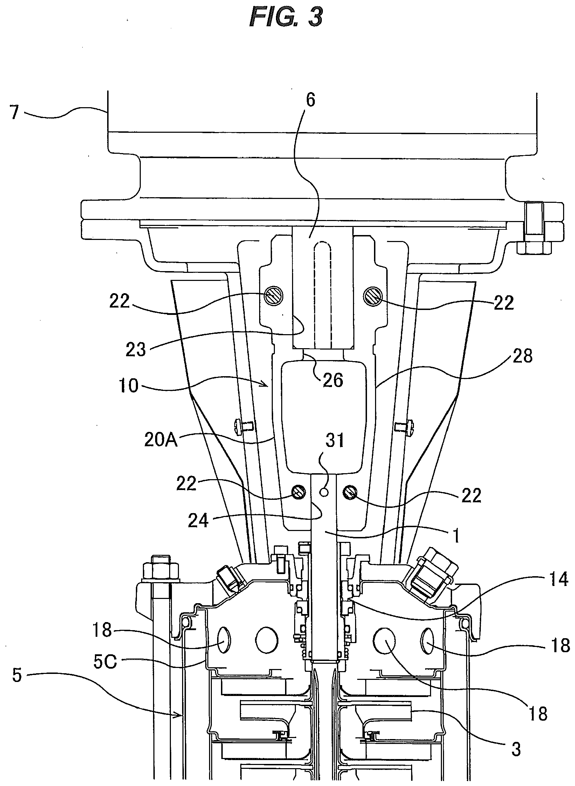

FIG. 2 is an enlarged cross-sectional view showing the shaft coupling 10 shown in FIG. 1, and FIG. 3 is a view seen from a direction shown by arrow A in FIG. 2. As shown in FIGS. 2 and 3, the shaft coupling 10 includes a first member 20A and a second member 20B which are divided along the axial direction of the shaft coupling 10, and a plurality of screws 22 as fastening devices that fasten the first member 20A and the second member 20B to each other. The fastening devices may be a combination of bolts and nuts. By tightening the screws 22, the first member 20A and the second member 20B are secured to the motor shaft 6 and the pump shaft 1, with a gap 21 formed between the first member 20A and the second member 20B.

The shaft coupling 10 has a first inner circumferential surface 23 that contacts an outer circumferential surface of the motor shaft 6, a second inner circumferential surface 24 that contacts an outer circumferential surface of the pump shaft 1, a step portion 26 protruding radially inwardly from the first inner circumferential surface 23 and contacting the end portion of the motor shaft 6, and a spacer portion 28 located between the step portion 26 and the second inner circumferential surface 24. The step portion 26 is located between the first inner circumferential surface 23 and the spacer portion 28. From a viewpoint of productivity and rotational balance, it is preferable that the step portion 26 be formed over the entire circumference of the first inner circumferential surface 23 facing the motor shaft 6 as viewed from the axial direction of the motor shaft 6. However, the step portion 26 may be partially formed. The first member 20A and the second member 20B have the first inner circumferential surface 23, the second inner circumferential surface 24, the step portion 26, and the spacer portion 28. Therefore, each of the first inner circumferential surface 23, the second inner circumferential surface 24, the step portion 26, and the spacer portion 28 is also divided into two along the axial direction.

Positioning pins 31, protruding outwardly, are secured to the pump shaft 1. Positioning holes 32, into which the positioning pins 31 are inserted respectively, are formed in the second inner circumferential surface 24 of the shaft coupling 10. The positioning pins 31 and the positioning holes 32 constitute a positioning element for fixing the relative position of the shaft coupling 10 and the pump shaft 1. It is noted that the positioning element is not limited to the positioning pins 31 and the positioning holes 32 illustrated in this embodiment. For example, the positioning element may include a screw hole formed in the second inner circumferential surface 24 of the shaft coupling 10, a positioning screw screwed into the screw hole, and a positioning hole formed in the pump shaft 1 with which the distal end of the positioning screw engages.

When the screws 22 are tightened while the end portion (the lower end in this embodiment) of the motor shaft 6 is in contact with the step portion 26, the first inner circumferential surface 23 of the shaft coupling 10 is pressed strongly against the outer circumferential surface of the motor shaft 6, so that the relative position of the first inner circumferential surface 23 and the motor shaft 6, i.e., the relative position of the shaft coupling 10 and the motor shaft 6, is fixed. The relative position of the second inner circumferential surface 24 of the shaft coupling 10 and the pump shaft 1 is fixed by the positioning pins 31 and the positioning holes 32.

The end portions of the motor shaft 6 and the pump shaft 1, coupled by the shaft coupling 10 according to the present embodiment, are spaced from each other. The end portion of the motor shaft 6 is in contact with the step portion 26, and the spacer portion 28 is present between the step portion 26 and the second inner circumferential surface 24. Therefore, the step portion 26 and the spacer portion 28 exist between the end portion of the motor shaft 6 and the end portion of the pump shaft 1. The distance between the end portion of the motor shaft 6 and the end portion of the pump shaft 1 is larger than the axial length of the mechanical seal 14. The shaft coupling 10 coupling the motor shaft 6 and the pump shaft 1 in a state in which the end portion of the motor shaft 6 and the end portion of the pump shaft 1 are spaced is called a spacer coupling.

The mechanical seal 14 is a device which is to be replaced regularly. In this embodiment, the replacement of the mechanical seal 14 is performed as follows. First, the screws 22 are removed, so that the shaft coupling 10 is removed from the motor shaft 6 and the pump shaft 1. Next, the mechanical seal 14 is raised along the pump shaft 1, and the mechanical seal 14 is removed from the gap between the end portion of the motor shaft 6 and the end portion of the pump shaft 1. Then, a new mechanical seal is moved downward from the gap along the pump shaft 1. Next, with the end portion of the motor shaft 6 contacting the step portion 26 and with the positioning pins 31 being inserted in the positioning holes 32, the screws 22 are tightened, whereby the shaft coupling 10 is secured to the motor shaft 6 and the pump shaft 1. The mechanical seal 14 is then further moved downward along the pump shaft 1 and secured to the pump casing 5.

According to the shaft coupling 10 of this embodiment, when the end portion of the motor shaft 6 is brought into contact with the step portion 26 of the shaft coupling 10, the positioning of the shaft coupling 10 with respect to the motor shaft 6 is achieved. As a result, the axial positioning of the pump shaft 1 coupled to the shaft coupling 10 is achieved. Since it is not necessary to perform special machining on the motor shaft 6, the pump apparatus can be made using a general-purpose motor. Therefore, the manufacturing cost of the pump apparatus can be reduced. Further, according to the shaft coupling 10 of this embodiment, positioning of the shaft coupling 10 with respect to the motor shaft 6 is achieved by simply bringing the end portion of the motor shaft 6 into contact with the step portion 26. Therefore, any special positioning tool is not necessary.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments. Therefore, the present invention is not intended to be limited to the embodiments described herein but is to be accorded the widest scope as defined by limitation of the claims.

### Industrial Applicability

The present invention is applicable to a shaft coupling (also referred to as a spacer coupling) that couples a motor shaft and a pump shaft while both shafts are spaced from each other. The present invention is further applicable to a pump apparatus having such a shaft coupling.

### Reference Signs List

- 1: pump shaft
- 3: impeller
- 5: pump casing
- 6: motor shaft
- 7: motor
- 10: shaft coupling
- 12: suction port
- 13: discharge port
- 14: mechanical seal
- 18: hole
- 19: flow path
- 20A: first member
- 20B: second member
- 21: gap
- 22: screw
- 23: first inner circumferential surface
- 24: second inner circumferential surface
- 26: step portion
- 28: spacer portion
- 31: positioning pin
- 32: positioning hole

## Claims

1. A shaft coupling comprising:
a first inner circumferential surface capable of contacting an outer circumferential surface of a motor shaft;
a second inner circumferential surface capable of contacting an outer circumferential surface of a pump shaft;
a step portion protruding radially inwardly from the first inner circumferential surface and capable of contacting an end portion of the motor shaft; and
a spacer portion located between the step portion and the second inner circumferential surface.

2. The shaft coupling according to claim 1, further comprising:
a first member and a second member which are divided along an axial direction of the shaft coupling, the first member and the second member including the first inner circumferential surface, the second inner circumferential surface, the step portion, and the spacer portion; and
a fastening device that fastens the first member and the second member to each other.

3. A pump apparatus comprising:
an impeller;
a pump shaft to which the impeller is secured;
a pump casing in which the impeller is housed;
a shaft-sealing device that seals a gap between the pump casing and the pump shaft;
a motor having a motor shaft; and
a shaft coupling that couples the motor shaft and the pump shaft to each other, the shaft coupling including
a first inner circumferential surface contacting an outer circumferential surface of the motor shaft,
a second inner circumferential surface contacting an outer circumferential surface of the pump shaft,
a step portion protruding radially inwardly from the first inner circumferential surface, the step portion being in contact with an end portion of the motor shaft, and
a spacer portion located between the step portion and the second inner circumferential surface.

4. The pump apparatus according to claim 3, wherein a distance between the end portion of the motor shaft and the end portion of the pump shaft is larger than an axial length of the shaft-sealing device.

5. The pump apparatus according to claim 3 or 4, wherein:
the shaft coupling further includes a first member and a second member which are divided along an axial direction of the shaft coupling, and a fastening device that fastens the first member and the second member to each other; and
the first member and the second member include the first inner circumferential surface, the second inner circumferential surface, the step portion, and the spacer portion.

6. The pump apparatus according to any one of claims 3 to 5, further comprising:
a positioning element configured to fix a relative position of the second inner circumferential surface and the pump shaft.
